# EUROPEAN PATENT APPLICATION

(11) **EP 2 107 562 A1**
(43) Date of publication of application: **07.10.2009**
(21) Application number: 09152990.9
(22) Date of filing: 17.02.2009
(51) Int. Cl.: G11B 7/085

(54) **Optical recording/reproducing apparatus**

(30) Priority: 31.03.2008 KR 20080029606
(71) Applicant: Samsung Electronics Co., Ltd., Suwon-si, Gyeonggi-do (KR)
(72) Inventor: Uto, Toshiki, Suwon-si, Gyeonggi-do (KR)
(74) Representative: D'Halleweyn, Nele Veerle Trees Gertrudis

(57) **Abstract**

An optical recording/reproducing apparatus includes a disc, a pickup to irradiate a laser beam to the disc and detect a reflected light of the irradiated laser beam, a controller to generate a tracking error signal from a signal of the reflected light and generate a control driving signal for track following by using the tracking error signal, a driving unit to perform tracking servo control by driving an actuator of the pickup according to the control driving signal, and an output unit to output an accelerating and decelerating control driving signal transmitted to the driving unit during the tracking servo control as a pulse width modulation (PWM) signal.

## Description

### BACKGROUND OF THE INVENTION

### 1. Field of the Invention

The present general inventive concept relates to an optical recording/reproducing apparatus and, more particularly, to an optical recording/reproducing apparatus which to stabilize a jump between tracks of a disc.

### 2. Description of the Related Art

With the development of video and audio media, discs capable of recording high-quality video information and high-quality audio information for a long time have commercially been used.

A disc varies a reflection of a laser beam by punctuating lots of pits on a surface thereof, thereby recording and/or reproducing information such as voices, images, and documents. A low-density disc, such as a compact disc (CD) or a digital versatile disc (DVD), has conventionally been used as a recording medium. Recently, a high-density disc, such as a Blu-ray disc (BD) or a high-density (HD) DVD, capable of recording a large quantity of information above a few tens of gigabytes has been developed and a use of a high-density disc has gradually been increased.

A conventional optical recording/reproducing apparatus which records information in a disc or reproduces the recorded information generates a tracking error signal by detecting a reflected light of a laser beam irradiated to the disc by a pickup and generates a control driving signal to follow a track of the disc by using the tracking error signal. The control driving signal is amplified by a driving unit to drive an actuator, thereby performing tracking servo control.

In the optical recording/reproducing apparatus performing the tracking servo control, a jump to a target track is implemented by transmitting an accelerating/decelerating driving amount for a prescribed time period to the actuator. Thereafter, a driving signal for tracking servo control is output to drive the actuator.

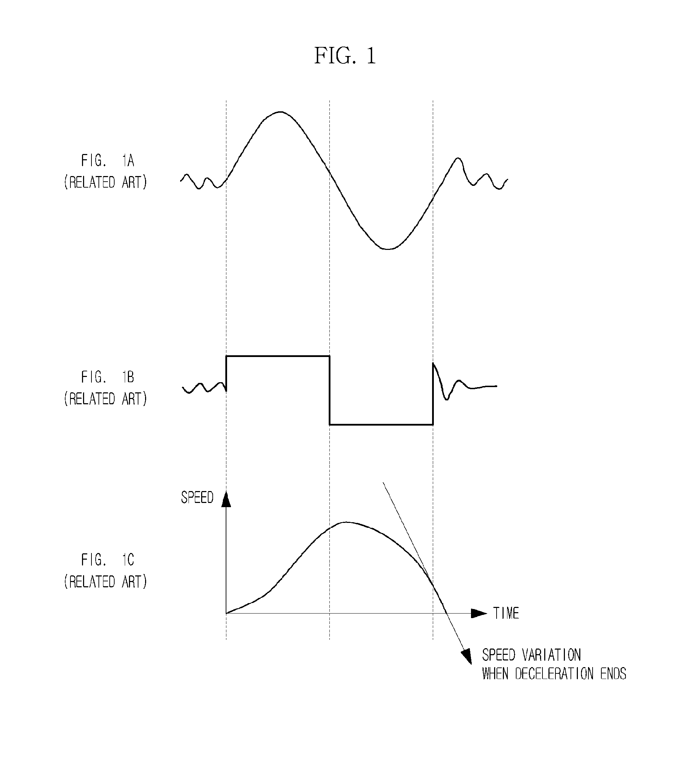

Generally, since a track pitch of a high-density disc is narrower than that of a low-density disc, a driving amount of the high-density disc should be smaller than that of the low-density disc. However, when the driving amount is small, a jump to a target track may fail due to a response delay of the actuator or an influence by a signal variation. Furthermore, since the driving amount for acceleration and deceleration is small, searching an optimal driving time and an optimal driving amount is difficult. This will be described with reference to FIGS. 1A to 1C.

FIGS. 1A to 1C are waveform diagrams of a track jump signal of a conventional optical recording/reproducing apparatus. FIG. 1A illustrates a tracking error signal during track jump, FIG. 1B illustrates a control driving signal during track jump, and FIG. 1C illustrates a pickup speed variation during track jump.

As illustrated in FIGS. 1A to 1C, when a driving amount is generated for track jump for a prescribed time period, acceleration is integrated with lapse of time. Therefore, the smaller an accelerating and decelerating driving amount is, the greater a speed variation is as time elapses.

For track jump of the conventional optical recording/reproducing apparatus, the high-density disc requires a smaller resolution of a digital-to-analog converter (DAC) to achieve a low speed. However, when a driving amount is decreased for a low speed, since a speed variation is greatly generated as time elapses, accelerating and decelerating driving is unstable at a short time period and searching an optimal driving time and an optimal driving amount is difficult.

### SUMMARY OF THE INVENTION

The present general inventive concept provides an optical recording/reproducing apparatus which can achieve track jump at a low speed by outputting an accelerating and decelerating driving amount as a pulse width modulation (PWM) signal during a track jump and thus stably implementing accelerating and decelerating driving at a short time period.

The present general inventive concept also provides an optical recording/reproducing apparatus which can stably implement track jump by minutely dividing a speed variation amount during a track jump and thus reducing a speed variation during tracking servo control.

The present general inventive concept also provides an optical recording/reproducing apparatus which can achieve minute adjustment even at a low resolution of a DAC by using a magnitude and duty of an accelerating and decelerating driving amount during track jump of a high-density disc.

Additional aspects and/or utilities of the general inventive concept will be set forth in part in the description which follows and, in part, will be obvious from the description, or may be learned by practice of the general inventive concept.

The foregoing and/or other aspects and utilities of the general inventive concept may be achieved by providing an optical recording/reproducing apparatus including a disc, a pickup to irradiate a laser beam to the disc and detect a reflected light of the irradiated laser beam, a controller to generate a tracking error signal from a signal of the reflected light and generate a control driving signal for track following by using the tracking error signal, a driving unit to perform tracking servo control by driving an actuator of the pickup according to the control driving signal, and an output unit to output an accelerating and decelerating control driving signal transmitted to the driving unit during the tracking servo control as a pulse width modulation (PWM) signal.

The actuator may be accelerated or decelerated by varying a duty of the accelerating and decelerating control driving signal output as the PWM signal.

The output unit may output the accelerating and decelerating control driving signal as the PWM signal for a track jump.

The output unit may output the accelerating and decelerating control driving signal as the PWM signal for a track seek.

The output unit may output an initial accelerating control driving signal as the PWM signal for a track seek.

The output unit may output a decelerating control driving signal generated before a target track as the PWM signal for a track seek.

The disc may have multiple layers in which information is recorded.

The output unit may output the accelerating and decelerating control driving signal as the PWM signal for a layer jump.

The output unit may output an initial accelerating control driving signal as the PWM signal for a layer jump.

The output unit may output a decelerating control driving signal generated before a target track as the PWM signal for a layer jump.

The foregoing and/or other aspects and utilities of the general inventive concept may also be achieved by providing an optical recording/reproducing apparatus including a disc, a controller to control tracking servo following a track of the disc, and an output unit to output an accelerating and decelerating control driving signal for track jump as a pulse width modulator (PWM) signal during tracking servo control.

The foregoing and/or other aspects and utilities of the general inventive concept may also be achieved by providing an optical recording/reproducing apparatus including a pickup to irradiate a laser beam onto tracks of a disc, an output unit to generate an accelerating and decelerating control driving signal corresponding to dividing a speed variation amount during a track jump between the tracks of the disc, and an actuator to drive the pickup corresponding to the accelerating and decelerating control driving signal.

The speed variation may be reduced during a tracking servo control.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:
FIGS. 1A to 1C are waveform diagrams illustrating a track jump signal of a conventional optical recording/reproducing apparatus;
FIG. 2 is a cross sectional view illustrating an outer configuration of a disc of an optical recording/reproducing apparatus according to an exemplary embodiment of the present general inventive concept;
FIG. 3 is a block diagram illustrating an optical recording/reproducing apparatus according to an exemplary embodiment of the present general inventive concept;
FIG. 4A is a waveform diagram illustrating a tracking error signal during a track jump according to an exemplary embodiment of the present general inventive concept;
FIG. 4B is a waveform diagram illustrating a control driving signal during a track jump according to an exemplary embodiment of the present general inventive concept;
FIG. 4C is a waveform diagram illustrating a pickup speed variation during a track jump according to an exemplary embodiment of the present general inventive concept; and
FIG. 5 is a flowchart illustrating a method of driving a pickup in an optical recording/reproducing apparatus according to an embodiment of the present general inventive concept.

### DETAILED DESCRIPTION OF THE PREFERRED EMBODIMENTS

Reference will now be made in detail to embodiments of the present general inventive concept, examples of which are illustrated in the accompanying drawings, wherein like reference numerals refer to the like elements throughout. The embodiments are described below to explain the present general inventive concept by referring to the figures.

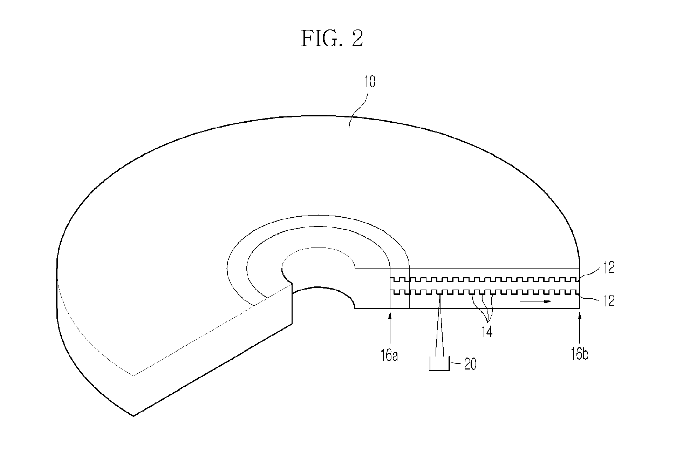

A description will be given of an exemplary embodiment of the present general inventive concept with reference to FIGS. 2 to 4C.

FIG. 2 is a cross sectional view illustrating an outer configuration of a disc of an optical recording/reproducing apparatus according to an exemplary embodiment of the present general inventive concept. Referring to FIG. 2, a disc 10 is a recording medium having layers 12 in which information is recorded. The disc 10 may include a low-density disc, such as a CD or a DVD, or a high-density disc, such as a BD or an HD DVD. Spiral tracks 14 are successively formed on the layers 12 of the disc 10.

In general, since a high-density disc records much more information than a low-density disc, a track pitch of the high-density disc is narrower than that of the low-density disc. To record much information, the disc 10 may include multiple layers 12 on one side or both sides thereof.

A pickup 20 irradiates a laser beam onto the tracks 14 of the layers 12 while moving from an inner circumference 16a to an outer circumference 16b or from the outer circumference 16b to the inner circumference 16a, thereby recording information or reproducing the recorded information.

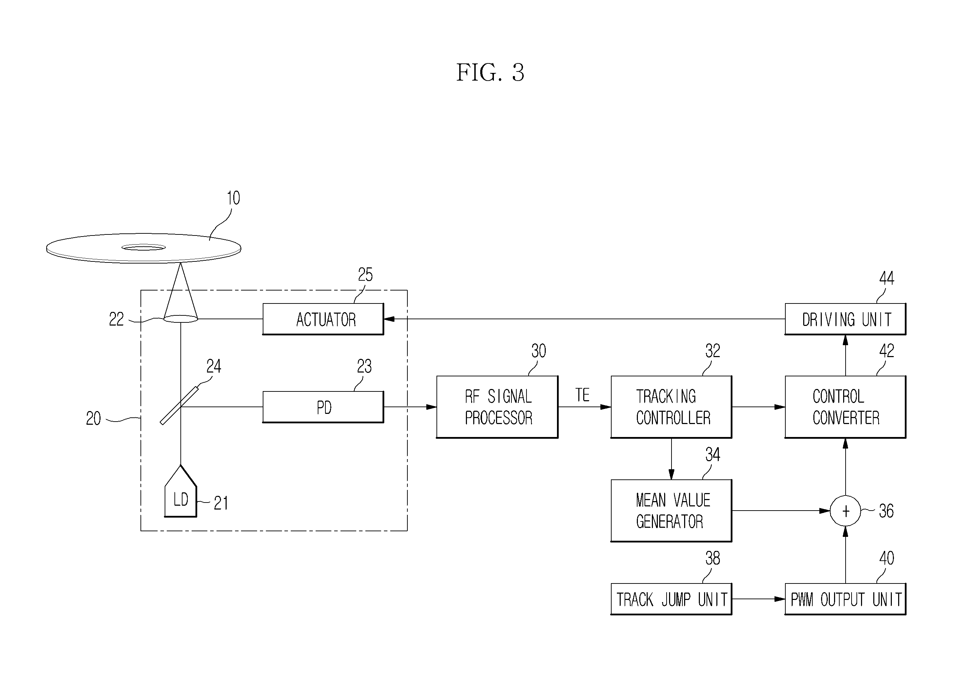

FIG. 3 is a block diagram illustrating an optical recording/reproducing apparatus according to an exemplary embodiment of the present general inventive concept. Referring to FIG. 3, the optical recording/reproducing apparatus includes a pickup 20, a radio frequency (RF) signal processor 30, a tracking controller 32, a mean value generator 34, an operation unit 36, a track jump unit 38, a pulse width modulation (PWM) output unit 40, a control converter 42, and a driving unit 44.

The pickup 20 irradiates a laser beam to a disc 10 to record information or reproduce the recorded information. The pickup 20 includes a laser diode (LD) 21 emitting a laser beam having a wavelength corresponding to a format of a disc 10, an objective lens 22 which forms an optical spot on signal recoding layers of the disc 10, that is, on the layers 12 by focusing the laser beam emitted from the laser diode 21, a photodiode integrated circuit (IC) 23 which detects an information signal and/or an error signal by receiving light reflected back from the disc 10 after being focused on the disc 10, an optical path converter 24 which irradiates the laser beam emitted from the laser diode 21 to the disc 10 or causes a reflected light of the laser beam irradiated to the disc 10 to be incident on the photodiode IC 23, and an actuator 25 which follows the tracks 14 of the disc 10 by moving the objective lens 22.

The actuator 25 of the pickup 20 accelerates or decelerates for tracking servo control a control driving signal supplied to the driving unit 44 from the tracking controller 32 so that the objective lens 22 may move between the tracks 14 and between the layers 12 of the disc 10.

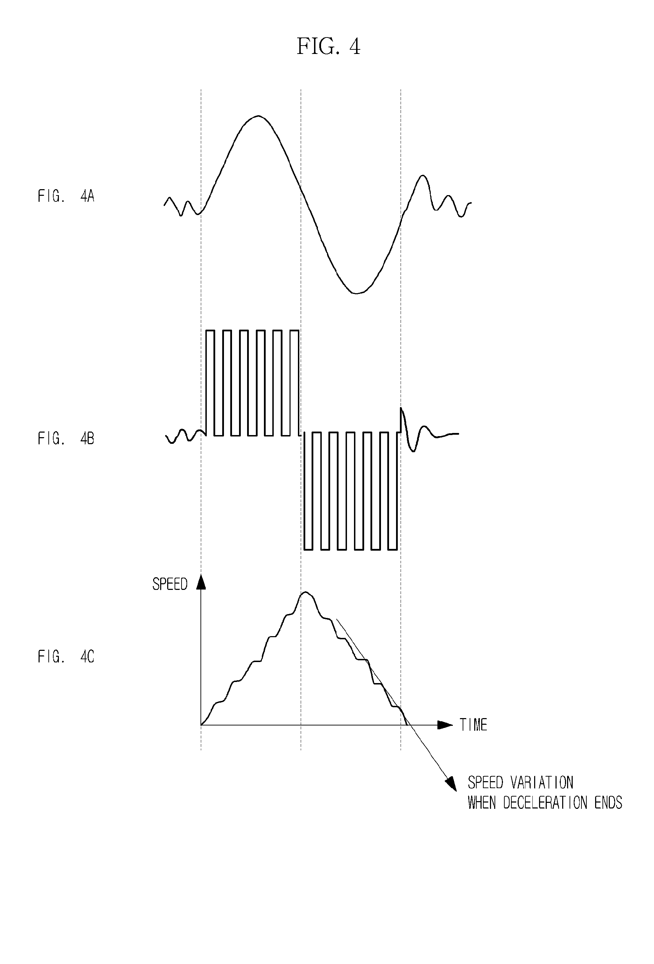

The RF signal processor 30 generates a tracking error signal TE, which is a signal deviating from the tracks 14, from a signal of the reflected light detected from the photodiode IC 23, as illustrated in FIG. 4A and transmits the tracking error signal TE to the tracking controller 32. The tracking error signal TE includes a tracking error signal of a differential phase detection type and a tracking error signal of a push-pull type.

The tracking controller 32 generates a control driving signal for track following by using the tracking error signal TE and performs tracking servo control according to the control driving signal.

The mean value generator 34 averages the driving control signals for tracking servo control and transmits a mean value to the operation unit 36. The track jump unit 38 generates an accelerating and decelerating control driving signal for track jump and controls track jump according to the accelerating and decelerating control driving signal.

The PWM output unit 40 generates the accelerating and decelerating control driving signal generated from the track jump unit 38 as a PWM signal so that the control driving signal during track jump may have a duty as illustrated in FIG. 4B. That is, the PWM output unit 40 causes the actuator 25 of the pickup 20 to have a driving speed as illustrated in FIG. 4C.

As described above, the PWM output unit 40 divides the accelerating and decelerating driving amount supplied to the driving unit 44 for tracking servo control into minute PWM signals, thereby improving the accelerating and decelerating characteristics of the actuator 25. To seek a plurality of tracks, the PWM output unit 40 processes initial accelerating driving, decelerating driving output before a target track, and accelerating and decelerating driving during track jump by PWM.

Furthermore, the PWM output unit 40 adjusts the accelerating and decelerating driving amount for track jump by a duty so that the jump control of the track 14 may accurately be controlled.

The control converter 42 alternately transmits the control driving signal of the tracking controller 32 and the control driving signal of the track jump unit 38 to the driving unit 44. The driving unit 44 may be a driving IC to drive the actuator 25 of the pickup 20 by the driving signal output from the control converter 42.

FIGS. 4A to 4C are waveform diagrams illustrating a track jump signal of the optical recording/reproducing apparatus according to an exemplary embodiment of the present general inventive concept. FIG. 4A illustrates a tracking error signal during track jump, FIG. 4B illustrates a control driving signal during track jump, and FIG. 4C illustrates a pickup speed variation during track jump.

In FIG. 3, when the disc 10 is loaded onto a drive of the optical recording/reproducing apparatus, the laser diode 21 of the pickup 20 emits a laser beam of a wavelength corresponding to a format of the disc 10 and the laser beam emitted from the laser diode 21 is focused through the objective lens 22, thereby forming an optical spot on the layers 12 of the disc 10.

The photodiode IC 23 of the pickup 20 detects a reflected light of the laser beam irradiated to the disc 10 from the laser diode 21 of the pickup 20. The RF signal processor 30 generates the track error signal TE from a signal of the reflected light detected by the photodiode IC 23 as illustrated in FIG. 3A and transmits the tracking error signal TE to the tracking controller 32.

The tracking controller 32 generates a control driving signal for track following by using the tracking error signal TE. The control driving signal is transmitted to the driving unit 44 via the control converter 42 and drives the actuator 25, thereby performing tracking servo control.

While the tracking servo control is performed, the PWM output unit 40 outputs the accelerating and decelerating control driving signal generated from the track jump unit 38 as a PWM signal so that the control driving signal during track jump may have a duty as illustrated in FIG. 3B.

The operation unit 36 performs an operation between the accelerating and decelerating driving amount having the duty illustrated in FIG. 3B and the driving mean value generated from the mean value generator 34. The accelerating and decelerating control signal increased or decreased through the operation unit 36 is transmitted to the driving unit 44 via the control converter 42 and drives the actuator 25, thereby moving the objective lens 22 to a target track.

After the objective lens 22 is moved to the target track, the control converter 42 generates the control driving signal of the tracking controller 32 for tracking servo control to drive the actuator 25, thereby completing the jump of the track 14.

As described above, the PWM output unit 40 minutely divides the accelerating and decelerating driving amount transmitted to the driving unit 44 into PWM signals to drive the actuator 25 of the pickup 20. Hence, a speed variation of the pickup 20 is decreased as time elapses as illustrated in FIG. 4C. As a result, accelerating and decelerating driving can be implemented at a short time period and track jump can be stabilized even at a low speed.

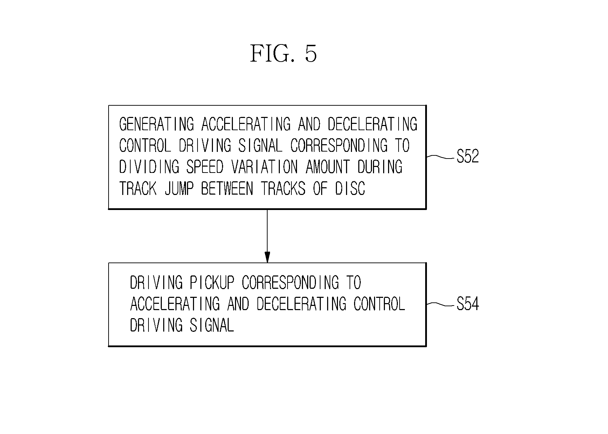

FIG. 5 illustrates a method of driving a pickup in an optical recording/reproducing apparatus according to an embodiment of the present general inventive concept. Referring to FIGS 2 and 5, in operation S52, an accelerating and decelerating control driving signal is generated corresponding to dividing a speed variation amount during a track jump between the tracks 14 of the disc 10. In operation S54, the pickup 20 is driven corresponding to the accelerating and decelerating control driving signal.

The present general inventive concept can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

As is apparent from the above description, since the optical recording/reproducing apparatus according to various embodiments of the present general inventive concept generates the accelerating and decelerating driving amount during track jump as a PWM signal, the accelerating and decelerating driving is performed at a short time period and track jump at a low speed can be stabilized. Moreover, since a speed variation during tracking servo control is decreased, track jump can stably be performed.

Further, since a speed is stabilized during driving output by using a duty during a track jump of a high-density disc, track jump is stabilized and minute adjustment can be achieved even at a low resolution of a DAC.

Although the exemplary embodiments of the present general inventive concept have been illustrated and described, it would be appreciated by those skilled in the art that changes may be made in these embodiments without departing from the principles and spirit of the general inventive concept, the scope of which is defined in the claims and their equivalents.

## Claims

1. An optical recording/reproducing apparatus, comprising:
a disc;
a pickup to irradiate a laser beam to the disc and detect a reflected light of the irradiated laser beam;
a controller to generate a tracking error signal from a signal of the reflected light and generate a control driving signal for track following by using the tracking error signal;
a driving unit to perform tracking servo control by driving an actuator of the pickup according to the control driving signal; and
an output unit to output an accelerating and decelerating control driving signal transmitted to the driving unit during the tracking servo control as a pulse width modulation (PWM) signal.

2. The optical recording/reproducing apparatus according to claim 1, wherein the actuator is accelerated or decelerated by varying a duty of the accelerating and decelerating control driving signal output as the PWM signal.

3. The optical recording/reproducing apparatus according to claim 1, wherein the output unit outputs the accelerating and decelerating control driving signal as the PWM signal for a track jump.

4. The optical recording/reproducing apparatus according to claim 1, wherein the output unit outputs the accelerating and decelerating control driving signal as the PWM signal for a track seek.

5. The optical recording/reproducing apparatus according to claim 1, wherein the output unit outputs an initial accelerating control driving signal as the PWM signal for a track seek.

6. The optical recording/reproducing apparatus according to claim 1, wherein the output unit outputs a decelerating control driving signal generated before a target track as the PWM signal for a track seek.

7. The optical recording/reproducing apparatus according to claim 1, wherein the disc has multiple layers in which information is recorded.

8. The optical recording/reproducing apparatus according to claim 7, wherein the output unit outputs the accelerating and decelerating control driving signal as the PWM signal for a layer jump.

9. The optical recording/reproducing apparatus according to claim 7, wherein the output unit outputs an initial accelerating control driving signal as the PWM signal for a layer jump.

10. The optical recording/reproducing apparatus according to claim 7, wherein the output unit outputs a decelerating control driving signal generated before a target track as the PWM signal for a layer jump.

11. An optical recording/reproducing apparatus, comprising:
a disc;
a controller to control tracking servo following a track of the disc; and
an output unit to output an accelerating and decelerating control driving signal for a track jump as a pulse width modulator (PWM) signal during tracking servo control.

12. The optical recording/reproducing apparatus according to claim 11, wherein a jump speed of the track is adjusted by varying a duty of the accelerating and decelerating control driving signal output as the PWM signal.

13. The optical recording/reproducing apparatus according to claim 11, wherein the output unit outputs the accelerating and decelerating control driving signal as the PWM signal for a track seek.

14. An optical recording/reproducing apparatus, comprising:
a pickup to irradiate a laser beam onto tracks of a disc;
an output unit to generate an accelerating and decelerating control driving signal corresponding to dividing a speed variation amount during a track jump between the tracks of the disc; andan actuator to drive the pickup corresponding to the accelerating and decelerating control driving signal.

15. The optical recording/reproducing apparatus of claim 14, wherein the speed variation is reduced during a tracking servo control.
